# EUROPÄISCHE PATENTSCHRIFT

(11) **EP 1 305 932 B1**
(45) Veröffentlichungstag und Bekanntmachung des Hinweises auf die Patenterteilung: **01.03.2006**
(21) Anmeldenummer: 01953933.7
(22) Anmeldetag: 20.07.2001
(51) Int. Cl.: H04M 1/11

(54) **FUNKGERÄTE MIT INTEGRIERTER ANTENNE**
RADIO DEVICES WITH AN INTEGRATED ANTENNA
APPAREIL RADIO AVEC ANTENNE INTEGREE

(30) Priorität: 03.08.2000 DE 10037995
(43) Veröffentlichungstag der Anmeldung: 02.05.2003
(73) Patentinhaber: SIEMENS AKTIENGESELLSCHAFT, 80333 München (DE)
(72) Erfinder: HUBER, Stefan, 80798 München (DE); OELSCHLÄGER, Martin, 12247 Berlin (DE); SCHREIBER, Michael, 85655 Aying-Göggenhofen (DE); SIEBINGER, Stefan, 89312 Günzburg (DE)
(74) Vertreter: Krombach, Rainer
(86) Internationale Anmeldenummer: PCT/DE2001/002770
(87) Internationale Veröffentlichungsnummer: WO 2002/013494

(56) Entgegenhaltungen:
- DE-A- 4 344 529
- PATENT ABSTRACTS OF JAPAN vol. 1999, no. 04, 30. April 1999 (1999-04-30) & JP 11 027355 A (KATO WORKS CO LTD), 29. Januar 1999 (1999-01-29)

## Beschreibung

Die Erfindung betrifft ein Funkgerät mit integrierter Antenne, insbesondere ein Mobilfunktelefon oder einen tragbaren Computer mit eingebautem Funkgerät.

Die rasante technische Entwicklung im Bereich der Mobilfunktelefone führt zu immer kleineren Geräten, welche gerade in letzter Zeit zunehmend ins Gerätegehäuse integrierte Antennen aufweisen, welche von außen nicht mehr sichtbar sind. Um zufriedenstellende Abstrahlwerte der integrierten Antenne zu gewährleisten, sind diese Antennen üblicherweise im oberen Bereich der Mobilfunktelefone, unterhalb der Rückschale(dem Kopf des Nutzers abgewandter Teil des Gehäuses) des Gerätegehäuses angeordnet.

Gegenüber der Verwendung externer, aus dem Gerätegehäuse herausragender Antennen, entsteht dabei der Nachteil, daß der Nutzer des Mobilfunktelefons beim üblichen Gebrauch mit seiner Hand bzw. seinen Fingern die integrierte Antenne ganz oder zumindest teilweise abdeckt und damit das Nahfeld der Antenne stört. Dies führt zu einer schlechteren Qualität der übertragenen Daten oder der übertragenen Sprache. Dies ist auch dann der Fall, wenn der Nutzer das Mobilfunktelefon ablegt und das Nahfeld der Antenne durch andere Gegenstände, wie beispielsweise ein Autodach, gestört wird.

Eine andere Positionierung der integrierten Antenne innerhalb des Gerätegehäuses zur Reduzierung dieser störenden Einflüsse ist nicht sinnvoll, da bei einer Verschiebung der integrierten Antenne Richtung Oberschale (dem Kopf des Nutzers zugewandter Teil des Gehäuses) die unerwünschte Leistungseinstrahlung in den Kopf des Nutzers ansteigt bzw. bei einer Verschiebung in den unteren Bereiche des Mobilfunktelefones die oben geschilderte Handabdeckung beim üblichen Gebrauch noch verstärkt wird.

Eine Vergrößerung des Hohlraumes zwischen integrierter Antenne und der Innenseite des Gehäuses hätte den Nachteil, daß das Gehäuse des Funkgerätes, und somit das Funkgerät selbst, zu dick wird.

Aus der DE-A-4344529 ist ein Funkgerät bekannt, das ein Gehäuse und eine integrierte Antenne aufweist, wobei das Gehäuse mit einem Gürtelclip verbunden ist.

Der Erfindung liegt daher die Aufgabe zu Grunde, ein Funkgerät mit integrierter Antenne anzugeben, das eine zufriedenstellende Qualität der zu sendenden bzw. der empfangenen Daten ermöglicht.

Diese Aufgabe wird durch die Merkmale des Anspruchs 1 gelöst. Vorteilhafte und zweckmäßige Weiterbildungen ergeben sich aus den abhängigen Ansprüchen.

Erfindungsgemäß ist das Gehäuse des Funkgerätes mit einem Gürtelclip verbunden, wobei die Verbindung des Gürtelclips mit dem Gehäuse derart gestaltet und derart relativ zur Antenne angeordnet ist, daß Störungen des Nahfeldes der Antenne reduziert werden.

Die Erfindung beruht also auf dem Gedanken, die Verbindung des Gehäuses des Funkgerätes mit einem Gürtelclip bewußt derart zu gestalten, daß das Nahfeld der Antenne weder durch die Hand eines Nutzers noch durch andere Gegenstände, auf welche das Mobilfunktelefon beispielsweise abgelegt ist, gestört wird. Dadurch wird eine zufriedenstellende Übertragungsqualität gewährleistet.

Eine Weiterbildung der Erfindung sieht vor, die Verbindung des Gürtelclips mit dem Gehäuse derart zu gestalten und derart auf der dem Kopf des Benutzers abgewandten Seite des Gehäuses anzuordnen, daß durch die Verbindung des Gürtelclips mit dem Gehäuse ein wesentlicher Teil der Oberfläche des Gehäuseabschnittes bedeckt ist, der die Antenne umgibt. Wesentlich dabei ist nicht, daß die Gestaltung des gesamten Gürtelclips die Störung des Nahfeldes reduziert, sondern daß die Gestaltung und Anordnung der Verbindung des Gürtelclips mit dem Gehäuse des Funkgerätes die Störung des Nahfeldes der Antenne verhindert. Andernfalls wäre eine Störung des Nahfeldes der integrierten Antenne in den Fällen möglich, in denen störende Elemente im Zwischenraum zwischen Gürtelclip und Gehäuse des Funkgerätes liegen. Dies wird an den Stellen, an denen der Gürtelclip mit dem Gehäuse des Grundgerätes verbunden ist, verhindert.

Die Erfindung wird im folgenden anhand bevorzugter Ausführungsbeispiele näher beschrieben, wobei zur Erläuterung dieser Ausführungsbeispiele nachstehende Figur dienen soll:

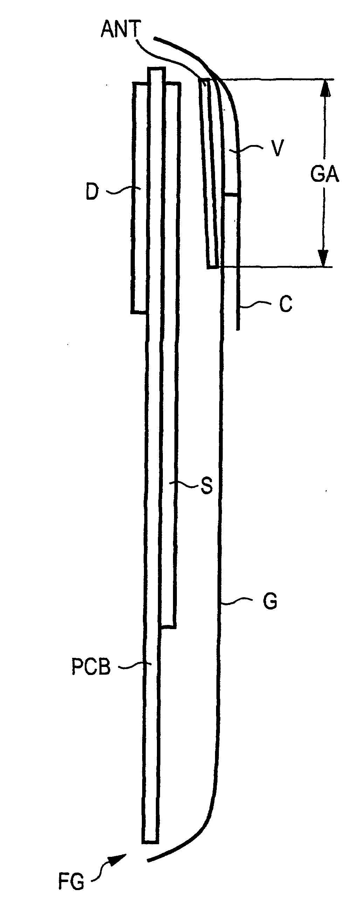

Figur 1: vereinfachte Querschnittsdarstellung des Aufbaus einer Ausführungsvariante des erfindungsgemäßen Funkgerätes.

Figur 1 zeigt im Querschnitt die für die Erfindung relevanten Komponenten eines Funkgerätes FG. Auf einer Leiterplatte PCB ist ein Display D sowie ein Schirmdeckel S angeordnet. Diese Komponenten und die integrierte Antenne ANT sind von einem Gehäuse G umgeben. Die integrierte Antenne ANT ist dabei im oberen Bereich auf der vom Kopf des Nutzers abgewandten Seite des Funkgerätes angeordnet. Ebenfalls im oberen Bereich des Funkgerätes FG ist an der Außenseite des Gehäuses G des Funkgerätes FG ein Gürtelclip C angebracht. Dieser Gürtelclip C ist mit einer Verbindung V mit dem Gehäuse G verbunden. Dabei wird durch die Verbindung V ein wesentlicher Teil der Oberfläche des Gehäuseabschnittes GA bedeckt, der die Antenne ANT umgibt.
Eine Ausführungsvariante der Erfindung sieht vor, daß der Gürtelclip lösbar mit dem Gehäuse G verbunden ist, wohingegen eine andere Ausgestaltung vorsieht, daß der Gürtelclip C fest mit dem Gehäuse G verbunden ist, daß beispielsweise das Gehäuse G und der Gürtelclip C einstückig gebildet sind.

Je größer der durch die Verbindung V des Gürtelclips C mit dem Gehäuse bedeckte Anteil der Oberfläche des Gehäuseabschnittes GA, der die Antenne ANT umgibt, desto größer ist die Reduktion der möglichen Störung des Nahfeldes der integrierten Antenne ANT, und desto besser ist somit die Übertragungsqualität.

Aus diesem Grund sehen Ausführungsvarianten der Erfindung vor, daß je nach Ausgestaltung zumindest 20%, zumindest 40%, zumindest 60% oder zumindest 80% der Oberfläche des Gehäuseabschnittes, der die Antenne ANT umgibt, bedeckt sind.

## Patentansprüche

1. Funkgerät (FG),
- mit einem Gehäuse (G),
- mit einer integrierten Antenne (ANT), die von dem Gehäuse (G) umgeben ist,
- wobei die Antenne (ANT) zumindest ein Nahfeld erzeugt,
**dadurch gekennzeichnet, daß**
das Gehäuse (G) mit einem Gürtelclip (C) verbunden ist, wobei die Verbindung des Gürtelclips (C) mit dem Gehäuse (G) derart gestaltet und derart relativ zur Antenne (ANT) angeordnet ist, daß Störungen des Nahfeldes der Antenne (ANT) reduziert werden, und wobei
- die Verbindung (V) des Gürtelclips (C) mit dem Gehäuse (G) derart gestaltet und derart auf der dem Kopf des Benutzers abgewandten Seite des Gehäuses (G) angeordnet ist, daß durch die Verbindung (V) des Gürtelclips (C) mit dem Gehäuse (G) ein wesentlicher Teil der Oberfläche des Gehäuseabschnittes (GA) bedeckt ist, der die Antenne (ANT) umgibt.

2. Funkgerät nach Anspruch 1,
- bei dem durch die Verbindung (V) des Gürtelclips (C) mit dem Gehäuse (G) zumindest 20% der Oberfläche des Gehäuseabschnittes (GA), der die Antenne (ANT) umgibt, bedeckt sind.

3. Funkgerät nach Anspruch 1,
- bei dem durch die Verbindung (V) des Gürtelclips (C) mit dem Gehäuse (G) zumindest 40% der Oberfläche des Gehäuseabschnittes (GA), der die Antenne (ANT) umgibt, bedeckt sind.

4. Funkgerät nach Anspruch 1,
- bei dem durch die Verbindung (V) des Gürtelclips (C) mit dem Gehäuse (G) zumindest 60% der Oberfläche des Gehäuseabschnittes (GA), der die Antenne (ANT) umgibt, bedeckt sind.

5. Funkgerät nach Anspruch 1,
- bei dem durch die Verbindung (V) des Gürtelclips (C) mit dem Gehäuse (G) zumindest 80% der Oberfläche des Gehäuseabschnittes (GA), der die Antenne (ANT) umgibt, bedeckt sind.

6. Funkgerät nach einem der vorhergehenden Ansprüche,
- bei dem der Gürtelclip (C) fest mit dem Gehäuse (G) verbunden ist.

## Revendications

1. Appareil radio (FG),
- comprenant un boîtier (G),
- comprenant une antenne intégrée (ANT) qui est entourée par le boîtier (G),
- l'antenne (ANT) générant au moins un champ proche,
**caractérisé en ce que**
le boîtier (G) est raccordé à un clip de ceinture (C), la liaison du clip de ceinture (C) avec le boîtier (G) étant réalisée de telle manière et étant disposée de telle manière relative à l'antenne (ANT) que des perturbations du champ proche de l'antenne (ANT) sont réduites, et
- la liaison (V) du clip de ceinture (C) avec le boîtier (G) étant réalisée de telle manière et étant disposée du côté du boîtier (G), détourné de la tête de l'utilisateur, de telle manière qu'en raison de la liaison (V) du clip de ceinture (C) avec le boîtier (G), une partie essentielle de la surface de la section (GA) du boîtier entourant l'antenne (ANT) est recouverte.

2. Appareil radio selon la revendication 1,
- dans lequel, en raison de la liaison (V) du clip de ceinture (C) avec le boîtier (G), au moins 20% de la surface de la section (GA) du boîtier entourant l'antenne (ANT) sont recouverts.

3. Appareil radio selon la revendication 1,
- dans lequel, en raison de la liaison (V) du clip de ceinture (C) avec le boîtier (G), au moins 40% de la surface de la section (GA) du boîtier entourant l'antenne (ANT) sont recouverts.

4. Appareil radio selon la revendication 1,
- dans lequel, en raison de la liaison (V) du clip de ceinture (C) avec le boîtier (G), au moins 60% de la surface de la section (GA) du boîtier entourant l'antenne (ANT) sont recouverts.

5. Appareil radio selon la revendication 1,
- dans lequel, en raison de la liaison (V) du clip de ceinture (C) avec le boîtier (G), au moins 80% de la surface de la section (GA) du boîtier entourant l'antenne (ANT) sont recouverts.

6. Appareil radio selon l'une quelconque des revendications précédentes,
- dans lequel le clip de ceinture (C) est raccordé de manière fixe au boîtier (G).

## Claims

1. Radio device (FG)
- with a housing (G),
- with an integrated antenna (ANT), enclosed by the housing (G),
- the antenna (ANT) generated at least one near field,
**characterised in that**
the housing (G) is connected to a belt clip (C), with the connection between the belt clip (C) and the housing (G) being configured and arranged relative to the antenna (ANT) such that disruption to the near field of the antenna (ANT) is reduced and with
- the connection (V) between the belt clip (C) and the housing (G) being configured and arranged on the side of the housing (G) facing away from the head of the user such that a significant part of the surface of the housing section (GA) enclosing the antenna (ANT) is covered by the connection (V) between the belt clip (C) and the housing (G).

2. Radio device according to claim 1,
- in which at least 20% of the surface of the housing section (GA) enclosing the antenna (ANT) is covered by the connection (V) between the belt clip (C) and the housing (G).

3. Radio device according to claim 1,
- in which at least 40% of the surface of the housing section (GA) enclosing the antenna (ANT) is covered by the connection (V) between the belt clip (C) and the housing (G).

4. Radio device according to claim 1,
- in which at least 60% of the surface of the housing section (GA) enclosing the antenna (ANT) is covered by the connection (V) between the belt clip (C) and the housing (G).

5. Radio device according to claim 1,
- in which at least 80% of the surface of the housing section (GA) enclosing the antenna (ANT) is covered by the connection (V) between the belt clip (C) and the housing (G).

6. Radio device according to one of the preceding claims,
- in which the belt clip (C) is connected in a fixed fashion to the housing (G).
